# EUROPEAN PATENT APPLICATION

(11) **EP 2 261 182 A1**
(43) Date of publication of application: **15.12.2010**
(21) Application number: 09160885.1
(22) Date of filing: 21.05.2009
(51) Int. Cl.: C03B 37/012, C03B 37/027, C03B 37/014

(54) **Method for fabricating a preform from glass particles**

(71) Applicant: Silitec Fibers SA, 2017 Boudry (CH)
(72) Inventor: Sandoz, Frédéric, CH-2016, Cortaillod (CH); Pedrido, Carlos, CH-2017, Boudry (CH); Hamel, Philippe, CH-2024, St-Aubin-Sauges (CH); Ribaux, Philippe, CH-2022, Bevaix (CH); Giraud, Alain, CH-1028, Preverenges (CH)
(74) Representative: Rutz & Partner

(57) **Abstract**

The inventive method relates to manufacturing a preform (9), comprising the preliminary process steps of holding a first tube (0) that encloses at least a first cylindrical or annular space (01, 11) and that comprises an access (07) such as a porous frit at its lower end (06); filling at least the first space (01) with glass particles (100); heating the glass particles (100) up to a temperature in the range between 600°C and 2200°C; guiding a gaseous compound of fluorocarbons and oxygen through the frit and through the first space (01); and comprising the final process steps of melting the glass particles (100).

## Description

### Method for fabricating a preform from glass particles

The present invention relates to a method for fabricating a preform and to a preform fabricated according to this method that is used for drawing optical fibers.

Lightwave propagation in optical fibers is described in [1], Jerry D. Gibson, The Communications Handbook, 1997 CRC Press, Chapter 55, pages 740-749,.

Fabrication of optical fibers, such as the fibers currently used in ultra high speed data communication networks, is described in [2], Mool C. Gupta, Handbook of PHOTONICS, CRC Press, 1997 Boca Raton, chapter 10.7, pages 445-450. Main process steps of optical fiber fabrication are, fabricating a preform, drawing the fiber from the preform and coating the fiber with a material that protects the fiber from handling and from environmental influences.

In the drawing process, the preform is fed from above into the drawing portion of a furnace while being drawn from the bottom using tractors. The fiber is then wound onto a drum while being monitored for tensile strength. The temperature during draw is typically in the range of 2000°C and higher. After exiting the furnace the fiber is coated with a UV-curable coating before winding on the drum.

According to [2], there are basically three methods to form a preform or blank. The modified chemical vapor deposition process (MCVD), the outside vapour deposition process (OVD) and the vapour-axial deposition process (VAD).

In [3], US 2007/214841 A1, which is herewith incorporated by reference, a further method for fabricating a preform is described. According to this method a primary preform is inserted into a silica tube. The free space remaining in the silica tube is then filled with silica grain. Next, a condition of reduced pressure is generated within the interior space of the silica tube that is closed, e.g. with an adjoiner that holds the primary preform and the silica tube in alignment. Then the assembled unprocessed secondary preform, i.e. the silica tube with the primary preform and the silica grain, is treated with a temperature in the range of 2100 °C to 2250 °C. As a result, the silica grain gets molten and fused to the primary preform, thus forming an overcladding layer on the primary preform. During this process stage, an optical fiber can simultaneously be drawn from the resulting secondary preform. Alternatively the secondary preform can completely be processed, cooled and forwarded to a further site, where the drawing process is performed. The described method advantageously allows fabricating preforms that are designed for drawing conventional fibers or Photonic Crystal Fibers.

Hence, this method allows manufacturing preforms at lower cost. However, for the handling of glass particles the well established processes described in [2] can not be applied.

A major concern in this new technology is the handling of impurities which could degrade the performance of the fabricated optical fibers. The deteriorations caused by impurities increases with the proximity of their location to the central axis of the preform. Impurities in the core most significantly affect the signals propagating in the optical fiber, while impurities in the outer cladding layers are less relevant. Hence, with the method disclosed in [3] only glass particles with the high purity can be applied.

Further, in order to obtain glass material with a required index of refraction, glass materials with a corresponding density are selected. For the core of the optical fiber a glass material with high-density and for the cladding region a porous glass material with a low-density are selected. However, producing and storing glass particles with a suitable density requires considerable efforts. For preforms with several cladding layers, different sorts of glass particles would be required.

It would therefore be desirable to provide an improved method for fabricating a primary or higher order preform from glass particles.

It would be desirable in particular to provide a method that allows fabricating a primary or higher order preform at reduced cost with glass particles that not necessarily need to have a specific density.

It would be desirable in particular to provide a method that allows fabricating a primary or higher order preform with higher purity, thus avoiding attenuation of the optical signals propagating within the core of the optical fiber.

### SUMMARY OF THE INVENTION

The above and other objects of the present invention are achieved by a method according to claim 1 and a preform according to claim 15.

The inventive method, which relates to manufacturing a preform, comprises the preliminary process steps of
- holding a first tube that encloses at least a first cylindrical or annular space and that comprises an access, such as a porous frit at its lower end;
- filling at least the first space with glass particles;
- heating the glass particles up to a temperature in the range between 600°C and 2200°C;
- guiding a gaseous compound of fluorocarbons and oxygen through the access and through the first space; and comprising final process steps including
- melting the glass particles.

The term "preform" relates to a primary or secondary preform that comprises a core and at least one cladding layer and that is used for drawing an optical fiber.

In [4], EP0948990A1, a process for destructing a fluorinated gas, such as fluorocarbon, is described. It is described that the gas is reacting at an elevated temperature with a first chemical reagent to form mainly solid reaction products. Hence, the thermal treatment of fluorocarbons result in a decomposition of the fluorocarbon compound leaving elements carbon and fluoride that will react with a partner, such as metal, creating CO2 as a by-product.

For the present invention, guiding the fluorocarbons and oxygen through the first tube also leads to a thermal decomposition of the fluorocarbons providing fluorine which will react with impurities present in the first tube. Hence, by this process impurities can be bound and removed from the glass particles. In order to successfully remove impurities a temperature in the range of 1600°C to 2200°C is applied. Preferably this treatment is performed for a period in the range from 1 hour to 6 hours.

At lower temperatures the fluoride will be incorporated in the glass particles leading to a desired reduction of the refractive index of this material. In order to reach a desired degree of incorporation of fluoride in the glass particles a temperature in the range between 600°C and 1600°C is applied for a time period in the range of 10 minutes to 6 hours.

Preferably the cleaning process is performed in a first process stage and the doping in a subsequent second process stage . Fluorocarbons suitable for the described processes are compounds, such as CF₄, C₂F₆, CCl₃F, CCl₂F₂ or CClF₃, which decompose at the described temperatures.

In a basic embodiment the first tube and the purified and/or doped glass particles can thermally be processed to become a primary preform. For a primary preform typically the purification process is performed only, since a fluorine doping will most often not be desirable for the core of a preform or the optical fiber drawn therefrom. Fluorine doped glass particles will typically be applied in one or more regions that relate the cladding layers of the optical fiber.

In a preferred embodiment the method comprises the process steps of:
- inserting a glass blank, and/or an innermost tube and/or at least an intermediate tube coaxially aligned into an outermost tube in order to create a cylindrical space and one or more annular spaces; and
- filling the spaces delimited by said tubes with different sorts of glass particles, at least one of them having been exposed to fluorocarbons and oxygen, in order to obtain a desired profile of the preform.

According to this embodiment of the invention, a secondary preform is assembled and filled with processed glass particles. For example, a primary preform or glass blank is inserted into an outermost tube. Then the annular space between the primary preform and the outermost tube is filled with the processed glass particles.

Alternatively, an innermost tube is inserted coaxially aligned into an outermost tube. Then different sorts of glass particles are inserted into the innermost tube and into the annular space between the innermost tube and the outermost tube. Both sorts of glass particles are preferably purified according to the inventive method. However, the glass particles inserted into the annular space are doped in addition with fluorine, thus having a lower index of refraction.

Still further, in addition to the innermost tube or a glass blank, one or more intermediate tubes may be inserted, providing two or more annular spaces between, on the one hand, the innermost tube or the glass blank, and, on the other hand, the outermost tube. These annular spaces, which relate to cladding layers are filled individually with at least two different sorts of glass particles, in order to obtain a stepped profile of the optical fiber. Still further, in order to create a preform, that is used for drawing photonic crystal fibers, a primary preform or an innermost tube and auxiliary tubes are inserted into the outermost tube. Then the spaces within the preform that relate to solid material of the drawn optical fiber are filled with processed glass particles.

Hence, the above embodiment relates to assembling a secondary preform that is then filled with one or more sorts of processed glass particles that have a desired index of refraction. The secondary preform may therefore have an architecture that can freely be designed by the manufacture. Of particularly importance is the fact that at least two different sorts of glass particles can be processed in one preform. as detailed below, this opens a complete meal range of applications, since materials, which appeared to be incompatible up to now, e.g. due to highly different coefficients of thermal expansion, can be processed with no additional effort. In the event that severe differences would cause any problems, then it would be possible to provide an adaptation layer originating from a glass tube or glass particles, which comprise mediating properties.

In the embodiment described below, the secondary preform is assembled and filled with glass particles, which are then processed according to the inventive method in order to obtain the desired profile of the secondary preform.

In this embodiment, a glass blank and/or an innermost tube and/or at least an intermediate tube is inserted coaxially aligned into the first or outermost tube in order to create a cylindrical space and one or more annular spaces.

For example, a primary preform or glass blank is inserted into the first tube. Alternatively, an innermost tube is inserted coaxially aligned into the first tube. Still further, in addition to the innermost tube or a glass blank, one or more intermediate tubes may be inserted, providing two or more annular spaces. In order to create a preform, that is used for drawing photonic crystal fibers, a primary preform or an innermost tube and auxiliary tubes are inserted into the first or outermost tube. Then the spaces within the preform that relate to solid material of the drawn optical fiber are filled with glass particles.

Subsequently the material provided in at least one of the different spaces of the preform, which are separated from one another, is selectively exposed to fluorocarbons and oxygen and temperatures between 600°C and 1600°C in order to obtain a desired profile of the preform.

Hence, this embodiment of the invention allows to assemble a secondary preform and then to emboss a specific profile into this secondary preform.

According to the two embodiments of the invention described above, glass particles can ever advantageously be treated or selected in such a way
- that two cladding layers with a higher refractive index are separated by a cladding layer with a significantly lower refractive index or
- that one cladding layer with a lower refractive index is embedded between the core and an outer layer with a higher refractive index.

With this profile, optical fibres can be drawn which exhibit a low attenuation, even when bent with a small radius. The cladding layer with the significantly reduced index of refraction confines the optical signals within the core region of the optical fiber, thus preventing losses.

In order to individually run fluorocarbon and oxygen through at least one of the different spaces in the assembled secondary preform, it is required that the surrounding glass provides access through an access, such as a glass frit that can consist of porous glass material. The access, e.g. the glass frit, has therefore a dual function. On the one hand it holds the glass particles in place. On the other hand it provides a channel for inserting the fluorocarbon and oxygen (02) into what is elected space or compartment within the outermost tube. A glass frit may selectively be placed on the first or outermost tube. However it is also possible, to provide a common access to all compartments or spaces, which then is masked as required in order to selectively transfer fluorocarbons and oxygen. In a first process stage, fluorocarbon and oxygen may be run through all spaces simultaneously at a temperature above 1600°C in order to perform purification of all glass particles. Subsequently the frit may be masked to provide access only to a specific space; e.g. the space corresponding to the cladding layer, which shall have a reduced index of refraction.

Further, the inventive method allows filling glass particles made of silica, crystal, sapphire, fluoride glass, or chalcogenides into the innermost tube forming the core of the preform and the optical fiber.

The inventive method therefore allows manufacturing preforms with a core and cladding layers that are made of two or more sorts of glass particles having different properties. Hence, the manufacturer can select different sorts of glass particles with desired properties, thus creating preforms and optical fibers with a core and at least one cladding layer providing better performance or additional functionalities.

Enclosing glass particles in separate compartments of a preform allows the use of different materials that would be incompatible in other manufacturing processes. In particular, the inventive method allows using materials with highly differing coefficients of thermal expansion. The innermost glass particles can consist or be made from elements like silica, sapphire (A1203), crystal, fluoride glasses (e.g.: ZBLAN or CaF2), chalcogenides (e.g.: Germanium Arsenic Sulphide; Selenide or Telluride) for example.

While fused silica (SiO2) has a near zero thermal expansion, sapphire, calcium fluorides and chalcogenides have comparably high coefficients of thermal expansion (A1203: 8.4 * 10⁻⁶/K; CaF2: 18.85 * 10⁻⁶/K; chalcogenides: typically 13-34 * 10⁻⁶/K). Hence, the application of these materials is in many applications extremely difficult or impossible.

With the inventive method, these materials can advantageously be applied, thus obtaining optical fibers with a broader transmission range starting from a wavelength of 170nm up to approx. 5000nm for sapphire and up to approx. 7800nm for calcium fluoride compared to a comparably small transmission range of fused silica of 185nm to approx. 2100nm.

According to the inventive method glass particles with a size of a fraction of one or a dozen of microns or more can be used. At least one of the outermost, the intermediate and the innermost tubes, if present, are made of silica, crystal, sapphire, fluoride glass, or chalcogenides. Further, the intermediate and/or the innermost tubes, and/or the auxiliary tubes, if present, can be removed before the final process stages are performed. Removable tubes rods can be made of any suitable material, such as plastic, carbon or metal.

Finally the process steps of:
- closing the first or outermost tube;
- generating a condition of reduced pressure within the first tube; and
- melting the assembled secondary preform

Are performed. further process steps, such as rotating the preform, etc., may be applied as being done in standard processes.

At this stage, an optical fiber, such as a Photonic Crystal Fiber, can be drawn from the lower end of the preform. Alternatively, the assembled preform can be fused over its entire length in order to obtain a processed preform, from which a fiber can be drawn at another site.

### BRIEF DESCRIPTION OF THE DRAWINGS

Some of the objects and advantages of the present invention have been stated, others will appear when the following description is considered together with the accompanying drawings, in which:
- Fig. 1: shows a first or outermost tube 0 having an interior space 01 filled with glass particles 100, through which one of the indicated gaseous compounds of fluorocarbons and oxygen is guided while the glass particles 100 are heated up to a temperature in the range between 600°C and 2200°C;
- Fig. 2: shows the first or outermost tube 0 of figure 1 with the processed glass particles 100;
- Fig. 3: shows an innermost tube 1 arranged coaxially aligned in the interior space 01 of an outermost tube 0;
- Fig. 4: shows the interior space 11 of the innermost tube 1 being filled with one sort of glass particles 101 and the remaining annular space 01 between the innermost tube 1 and the outermost tube 2 being filled with another sort of glass particles 100, that have been processed as shown in figure 1;
- Fig. 5: shows the removal of the innermost tube 1 that may be made of glass, plastic, carbon or metal; leaving the different sorts of glass particles 100, 101 bordering against one another;
- Fig. 6: shows the preform 9 of figure 5 after the removal of the innermost tube 1, but additionaly provided with auxiliary tubes 7, while being lowered into a furnace 83;
- Fig. 7: shows the preform 9 of figure 4 without removal of the innermost tube 1, while being lowered into a furnace 83;
- Fig. 8: shows a solid primary or secondary preform 10 placed axially aligned within the interior space 11 of the innermost tube 1 of a secondary preform 9;
- Fig. 9: shows an innermost tube 1 and two intermediate tubes 2, X located within an outermost tube 0 of a secondary preform 9; and
- Fig. 10: shows an apparatus 8 used for drawing an optical fiber 90 from an inventive secondary preform 9.

### DETAILED DESCRIPTION OF THE PREFERRED EMBODIMENTS

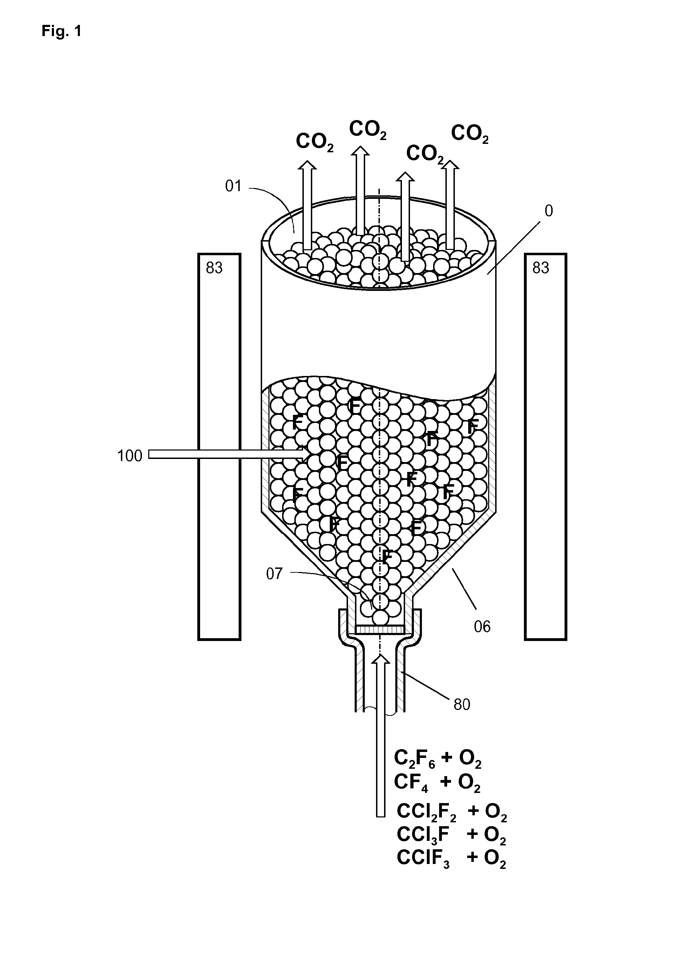

Figure 1 shows a first or outermost tube 0 having an interior space 01 filled with glass particles 100, through which a gaseous compound of fluorocarbons, such as fluorocarbons consisting of CF₄, C₂F₆, CCl₃F, CCl₂F₂ or CClF₃, and oxygen are guided while the glass particles 100 are heated up to a temperature in the range between 600°C and 2200°C by means of a furnace or oven 83. The mixture of fluorocarbons and oxygen is provided by a supply line 80 and can enter the outermost tube 0 through an access 07 provided at the lower end 06 of the outermost tube 0.

It is illustrated, that due to thermo-chemical processes the above described decomposition of the fluorocarbons occurs, leading to a reaction of carbon with oxygen. Hence, carbon dioxide is exiting the outermost tube 0 at its upper end, while fluorine either interacts with impurities, such as metals, oxides and organics or penetrates into the glass particles 100, thus influencing the refractive index of the material.

Due to the high reactivity of the freed fluorine, particularly in the presence of oxygen, impurities can efficiently be removed. Typically, the treatment would be applied for 1 hour to 6 hours, with a temperature in the range between 1600°C and 2200°C, depending on the desired purity of the glass particles 100.

Purification is preferably performed in the first process stage. In a next process stage, if arranged for, the gas flow is maintained for doping the glass particles 100 with fluorine at a temperature in the range between 600°C and 1600°C for a time period of 10 minutes up to 6 hours, depending on the fluoride concentration desired in the glass particles 100.

Hence, the inventive method allows the desired purification and adjustment of the refractive index of the glass particles 100, e.g. according to a profile predetermined for a secondary preform 9 or an optical fiber 90.

It is shown in figure 1 that the gaseous mixture of fluorocarbons and oxygen is introduced at the lower end 06 of the outermost tube 0 through an access 07 which is preferably provided with a porous glass frit that allows passing of the gas flow, while the glass particles remain trapped within the outermost tube 0.

As will be further described below, the outermost tube 0 may comprise different spaces or compartments, which axially are separated from one another and are designed to receive glass particles. In preferred embodiments, each of these compartments comprises an opening, through which gas can be guided. It is also possible to use a common opening, which would be masked, thus providing access only to selected compartments. Hence, the lower end 06 of the tube 0 could be completely porous and being masked according to a profile to be achieved. Preferably the glass frit 07 is an integral part of the outermost tube 0.

After the preliminary process of purification and doping has been completed there are two different ways to proceed. Either the processed glass particles 100 are molten together with the outermost tube 0 shown in figure 1 in order to create a primary preform. Alternatively, the glass particles 100 are transferred from the first outermost tube, which is provided for processing the glass particles only, to an outermost tube 0 of a secondary preform.

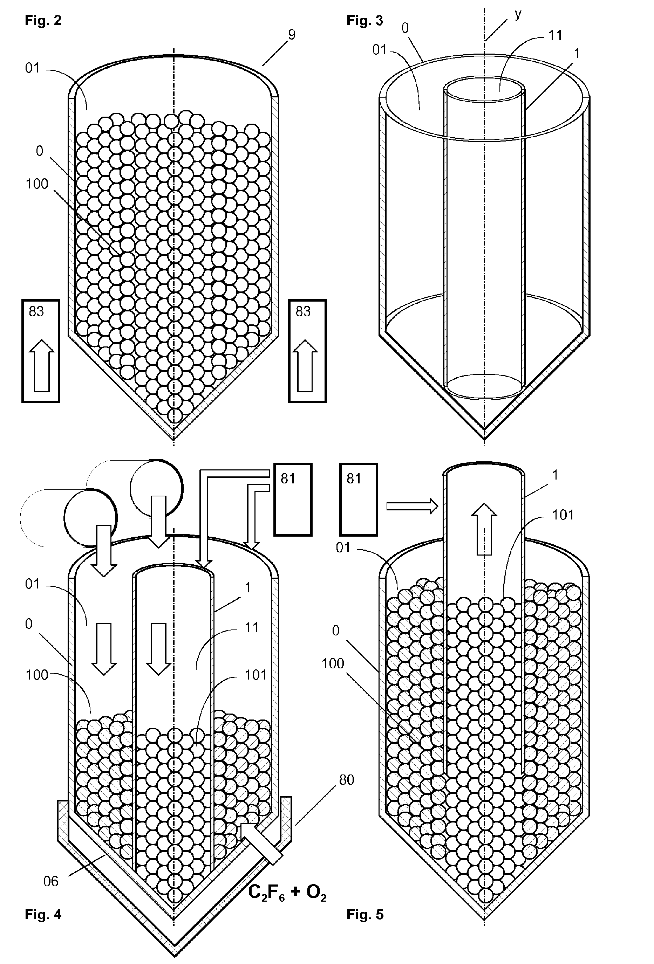

Figure 2 shows the first or outermost tube 0 of figure 1 with the processed glass particles 100, which in combination can be regarded as an unprocessed primary preform 9. Since a primary preform 9 usually has a high refractive index, the glass particles 100 were purified but typically not doped with fluoride. Instead other dopants such as germanium could have been applied. In a final process stage the outermost tube 0 will be closed and evacuated. Then the outermost tube 0 and the glass particles 100 are fused by means of a furnace 83, which is guided along the preform 9.

Figure 3 shows an innermost tube 1 having an interior space 11 that is located coaxially aligned within an outermost tube 0 having a primary axis y, an interior space 01 and a conical closure 09 at its lower end. This arrangement is selected for producing a secondary preform that comprises a core and one cladding layer.

The outermost tube 0 is typically a thin walled silica tube. Since grinding procedures may be applied to remove the outermost tube 0 after the secondary preform has been fused, it is possible to apply other materials.

The innermost tube 1, which may also comprise a closure at its lower end, may be made of any suitable glass material as detailed below. In the event that the innermost tube 1 is removed before the assembled secondary preform is fused, then it may be preferable to use an innermost tube 1 made of other material than glass that exhibits preferred mechanical properties. An innermost tube 1 made of metal can for example have a smaller wall-diameter without risking damaging the tube while handling, i.e. inserting, filling or removing.

Figure 4 shows as a first option the interior space 11 of the innermost tube 1 being filled with one sort of glass particles 101 and the remaining annular space 01 between the innermost tube 1 and the outermost tube 2 being filled with another sort of glass particles 100. Typically, the innermost tube would be filled with purified glass particles 101 that were not doped with fluorine. The annular space 01 would however be filled with glass particles 100 that were purified and doped with fluorine.

In order to obtain an even distribution of the inserted glass particles 100, 101 a mechanical vibration is preferably applied to the outermost tube 0 and/or to the innermost tube 1. This vibration may be applied by a device 81, which is holding the assembled tubes 0, 1. The frequency of the vibration is preferably adapted to the size of the glass particles 100, 101 and is preferably inverse proportional to their size.

Figure 4 shows as a second option, namely the application of fluorocarbons and oxygen to the glass particles 100 provided in the annular space 01. With this option is possible to supply only one sort of glass particles into the innermost and into the outermost tubes 0, 1. In a first process stage all glass particles could be purified according to the inventive method by guiding fluorocarbons and oxygen through the innermost tube 1 and through annular space 01 with a temperature of above 1600°C. In a second process stage fluorocarbons and oxygen are guided through the annular space 01 only had a temperature below 1600°C, thus doping the glass particles 100 there with fluorine and reducing the index of refraction. In the second process stage the lower end of the outermost tube 0 is masked preventing the fluorocarbons from entering the innermost tube 1.

Figure 5 shows the removal of the innermost tube 1 leaving the innermost glass particles 100 and the intermediate glass particles 101 bordering against one another.

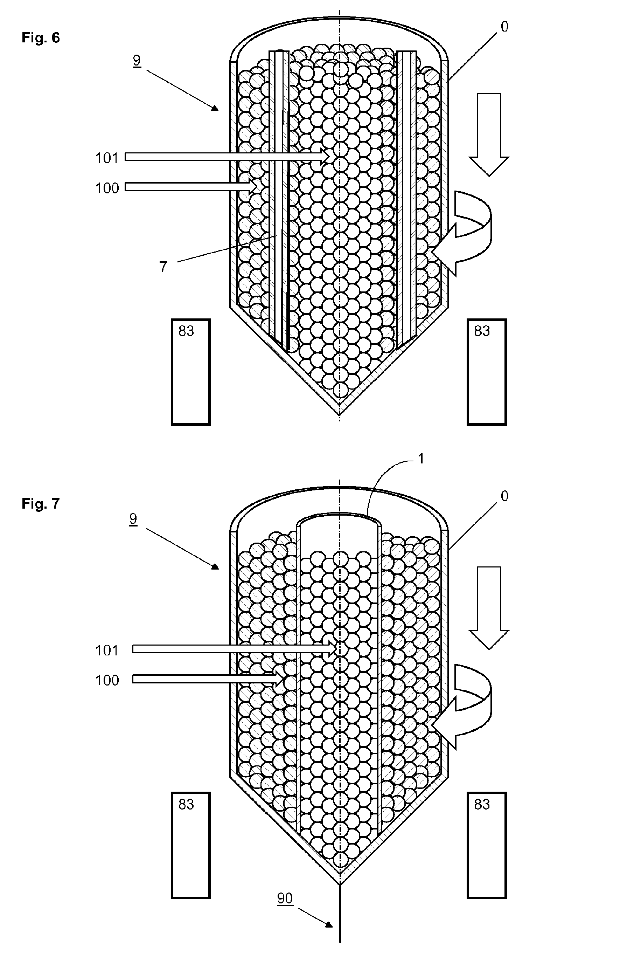

Figure 6 shows a secondary preform 9 after the complete removal of the innermost tube 1, while being lowered into a furnace 83. This preform 9 is additionally provided with auxiliary tubes 7 that are arranged within the innermost tube 1 in a periodic structure as required for the production of Photonic Crystal Fibers. The furnace 83 is used for performing the final thermal processing of the preform 9, which then may be removed for drawing an optical fiber 90 at another site.

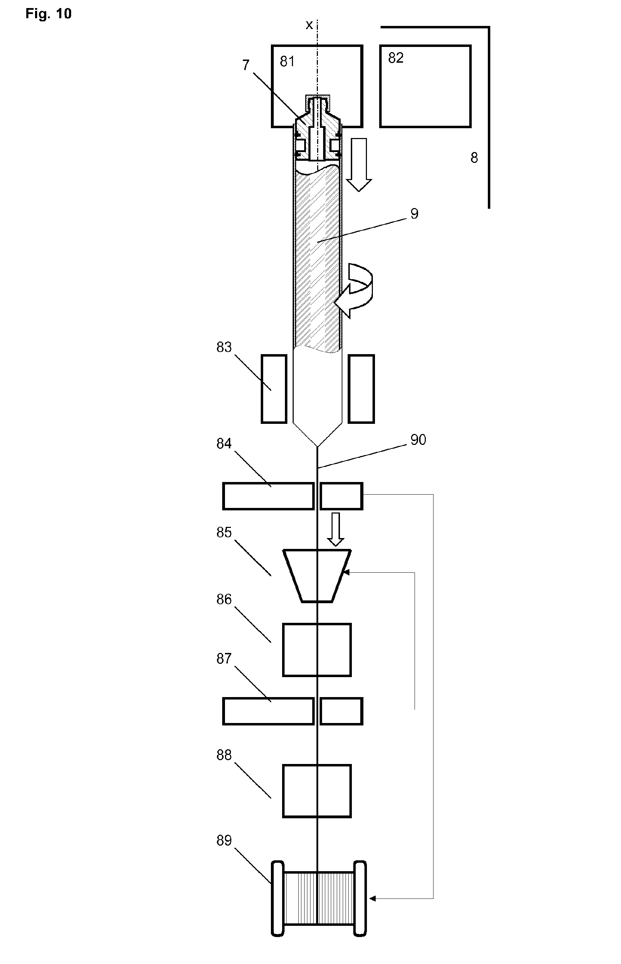

However, in a further preferred embodiment the glass particles 100, 101 and the applied tubes 0, 1 can be fused while simultaneously drawing an optical fiber 90 with an apparatus 8 as shown in figure 10. Before this process stage is executed, the outermost tube 0 is preferably sealed and evacuated, e.g. by means of the vacuum pump 82 shown in figure 10. In figures 4-9 the inventive secondary preforms 9 are therefore shown only principally without the required armature that is shown in figure 10.

Figure 7 schematically shows processing of the preform 9 in a furnace 83 while simultaneously drawing an optical fiber 90 without prior removal of the innermost tube 1. The innermost tube 1 can be used as an adaptation layer for the neighbouring materials. In the event that the innermost glass particles are made of sapphire, fluoride glass, or chalcogenides, then an innermost tube made of borosilicate will advantageously adapt this material to a neighbouring silica layer.

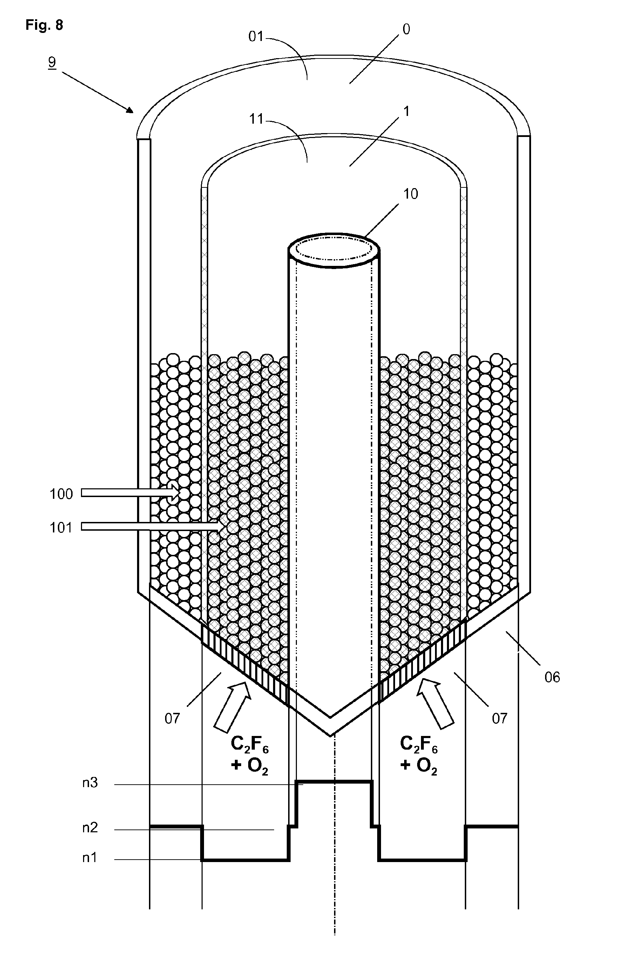

Figure 8 shows a secondary preform during the fill procedure with a solid secondary preform 10 placed axially aligned within the interior space 11 of the innermost tube 1. The remaining interior space 11 of the innermost tube 1, i.e. a further annular space, is filled with one sort of glass particles 101.

The annular space 01 between the innermost tube 1 and the outermost tube 2 is filled with another sort of glass particles 100. It is shown that the secondary preform 10 comprises a thin cladding layer with the same refractive index n2 as the glass particles 100 in the outermost annular space 01. The glass particles 101 placed within the innermost tube 1 comprise a reduced refraction index n1 preventing the optical signals from escaping from the core of the optical fiber 90 drawn from this preform 9. The different sorts of glass material are preferably processed according to the inventive method. However as explained above, is also possible to insert only one sort of glass particles into, e.g. the annular spaces 01, 11 of the preform 9 and to provide the inventive process of doping with fluorine as described above with reference to figure 4.

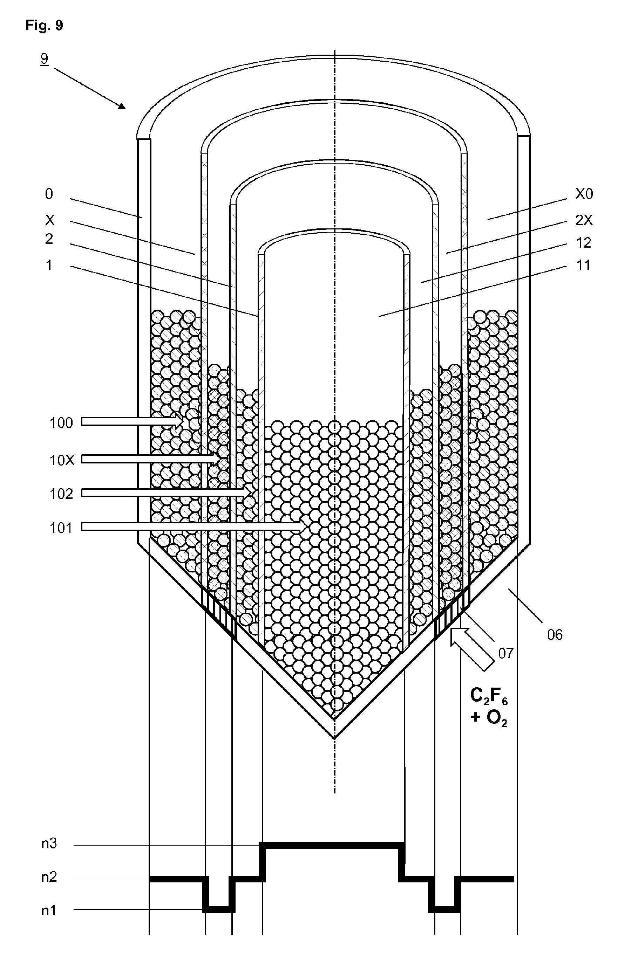

Figure 9 shows an innermost tube 1 and two intermediate tubes 2, X located within an outermost tube 0. The interior space 11 of the innermost tube 1 and the spaces 12, 2X, X0 delimited by the outermost tube 0, the intermediate tubes 2, X and the innermost tube 1 are partially filled with different sorts of glass particles 100, 101, 102, 10n, that are selected according to a desired profile. Also for this structure of a secondary preform 9 both options can be applied. Either suitable sorts of glass particles 100, 101, 102, 10X, purified and/or doped according to the inventive method are inserted. Alternatively, purification and doping can be applied as described above with reference to figures 1, 4 and 8.

Figure 10 shows an apparatus 8 used for drawing an optical fiber 90 from an inventive secondary preform 9.

The secondary preform 9 is mounted in a holding device 81, which allows controlled vertical movement along and preferably rotation around its axis x. Furthermore the holding device 81 may be designed to apply a vibration onto the secondary preform 9 as described above.

The apparatus may also be used for filling purposes, e.g. for filling and performing a preliminary heating of the glass particles 100, 101, ..., during the fill procedure. Further the apparatus may be used to pre-process the preform 9; i.e. to fuse the glass particles 100, 101, ..., and the tubes 0, 1, 2, 3 ... without drawing and optical fiber 90.

For fusing the preform 9 only and/or for drawing an optical fiber 90, the assembled secondary preform 9 is evacuated and sealed.

After all of the above mentioned preparations have been completed, the secondary preform 9 is heated to its melting point and an optical fiber 90 is drawn from an angular area called the neck-down located at the lower end of the preform 9. A single optical fiber 90 emerges from the secondary preform 9 in a semi-molten state and passes through a diameter monitor 84. The optical fiber 90 continues to be pulled downward and passes through a coating applicator 85 that applies a coating to protect and preferably visually mark the optical fiber 90.

The optical fiber 90 also passes through other units 86, 87 that cure the optical coating and monitor the overall diameter after the coating has been applied. The optical fiber 90 then encounters a spinning apparatus 88 which may comprise a roller that imparts a spin into the optical fiber. The optical fiber 90 then eventually encounters a series of rollers (not shown) pulling the optical fiber before it is wrapped around a drum or spool 89.

### REFERENCES:

[1] Jerry D. Gibson, The Communications Handbook, 1997 CRC Press,
[2] Mool C. Gupta, Handbook of PHOTONICS, CRC Press, 1997 Boca Raton, chapter 10.7, pages 445-449
[2] US 2007/214841 A1
[3] US2004156401A1
[4] EP0948990A1

## Claims

1. Method for manufacturing a preform (9), comprising the preliminary process steps of:
holding a first tube (0) that encloses at least a first cylindrical or annular space (01, 11) and that comprises an access (07), such as a porous frit, at its lower end (06);
filling at least the first space (01) with glass particles (100);
heating the glass particles (100) up to a temperature in the range between 600°C and 2200°C;
guiding a gaseous compound of fluorocarbons and oxygen through the access and through the first space (01); and
comprising the final process steps of:
melting the glass particles (100).

2. Method according to claim 1, wherein the step of heating the glass particles (100) involves selecting a temperature in the range between 1600°C and 2200°C in order to remove impurities.

3. Method according to claim 2, wherein the step of heating the glass particles (100) is performed for a period in the range of 1 hour to 6 hours.

4. Method according to claim 1, 2 or 3, wherein the step of heating the glass particles (100) involves selecting a temperature in the range between 600°C and 1600°C in order to dope the glass particles with fluorine.

5. Method according to claim 4, wherein the step of heating the glass particles (100) in order to dope the glass particles with fluorine is performed for a period in the range of 10 minutes to 6 hours.

6. Method according to one of the claims 1 - 5, comprising the steps of selecting fluorocarbons consisting of CF₄, C₂F₆, CCl₃F, CCl₂F₂ or CClF₃.

7. Method according to one of the claims 1 - 6, comprising the process steps of:
inserting a glass blank (10) and/or an innermost tube (1) and/or at least an intermediate tube (2, X) coaxially aligned into an outermost tube (0) in order to create a cylindrical space (11) and one or more annular spaces (12, 2X, X0); and
filling the spaces (11, 12, 2X, X0) delimited by the glass blank (10) and/or the innermost tube (1) and/or the at least one intermediate tube (2, X) with different sorts of glass particles (100, 101, 102, 10X), at least one of them having been exposed to fluorocarbons and oxygen, in order to obtain a desired profile of the preform (9).

8. Method according to one of the claims 1 - 6, comprising the preliminary process steps of:
inserting a glass blank (10) and/or an innermost tube (1) and/or at least an intermediate tube (2, X) coaxially aligned into the first tube (0) in order to create a cylindrical space (11) and one or more annular spaces (12, 2X, X0); and
filling the spaces (11, 12, 2X, X0) delimited by the glass blank (10) and/or the innermost tube (1) and/or the at least one intermediate tube (2, X) with glass particles (100, 101, 102, 10X) and selectively exposing the glass particles (100, 101, 102, 10X) in at least one of the spaces (11, 12, 2X, X0) to fluorocarbons and oxygen and temperatures between 600°C and 1600°C in order to obtain a desired profile of the preform (9).

9. Method according to claim 7 or 8, comprising the step of inserting a plurality of removable or non-removable auxiliary tubes (71, 72) in an at least substantially periodic structure into the outermost tube (0) or the innermost tube (1) or into at least one of the annular spaces (12, 2X, X0).

10. Method according to claim 8 or 9, comprising the steps of selecting or treating the glass particles (102; 103; 104; 100) in such a way
a) that two cladding layers with a higher refractive index are separated by a cladding layer with a lower refractive index or
b) that one cladding layer with a lower refractive index is embedded between the core and an outer layer with a higher refractive index.

11. Method according to one of the claims 1-10, comprising the steps of filling glass particles (101) made of silica, crystal, sapphire, fluoride glass, or chalcogenides into the innermost tube (1).

12. Method according to one of the claims 1 - 11, comprising the steps of using glass particles (100, 101, 102, ...) with a size of a fraction of one or a dozen of microns and selecting at least one of the outermost, the intermediate and the innermost tubes (0, 1, 2, ..., X) made of silica, crystal, sapphire, fluoride glass, or chalcogenides or selecting at least one removable intermediate or innermost tube (1, 2, ..., X) made of plastic, carbon or metal.

13. Method according to one of the claims 1 - 12, comprising the steps of removing at least one of the innermost tube (1), the intermediate tubes (2; 3; ...; X), or the auxiliary tubes (71, 72) prior to performing the final process steps.

14. Method according to one of the claims 1 - 13, comprising the final process steps of:
closing the first or outermost tube (0);
generating a condition of reduced pressure within the first tube (0); and
melting, by a furnace (83), the assembled secondary preform (9) at its lower end to a softened state and simultaneously drawing an optical fiber (90), such as a Photonic Crystal Fiber therefrom or
melting, by a furnace (83), the assembled preform (9) over its entire length in order to obtain a processed preform (9).

15. Preform (9) produced according to the method as defined in one of the claims 1 -14.
